## Europäisches Patentamt
## European Patent Office
## Office européen des brevets

(11) Publication number: **0 201 108**
**B1**

(12) # EUROPEAN PATENT SPECIFICATION

(45) Date of publication of patent specification :
19.10.88

(51) Int. Cl.⁴ : **G 03 B 27/60**

(21) Application number : 86106357.6

(22) Date of filing : 09.05.86

(54) **Apparatus for securing a photosensitive sheet.**

(30) Priority : 10.05.85 JP 99976/85

(43) Date of publication of application :
12.11.86 Bulletin 86/46

(45) Publication of the grant of the patent :
19.10.88 Bulletin 88/42

(84) Designated contracting states :
DE FR GB

(56) References cited :
DE-A- 3 102 489
US-A- 2 895 706
US-A- 3 545 860

(73) Proprietor : Dainippon Screen Mfg. Co., Ltd.
1-1, Tenjinkitamachi Teranouchi-agaru 4-chome Hori-kawa-dori
Kamikyo-ku Kyoto 602 (JP)

(72) Inventor : Nishihama, Takamichi
104-21 Nishiima-cho
Hikone Shiga (JP)
Inventor : Okada, Kotaro
2578-3 Takamiya-cho
Hikone Shiga (JP)
Inventor : Kadota, Shigekazu
615 Baba-cho, Kawase
Hikone Shiga (JP)

(74) Representative : Goddar, Heinz J., Dr. et al
FORRESTER & BOEHMERT Widenmayerstrasse 4/I
D-8000 München 22 (DE)

## Description

The present invention relates to an apparatus for securing a sheet material, such as a photosensitive sheet, hereinafter referred to as a sheet, and more particulary an apparatus for securing a sheet under suction, adaptable for use in combination with a process camera, a step-and-repeat machine, an automatic drafting machine, or the like.

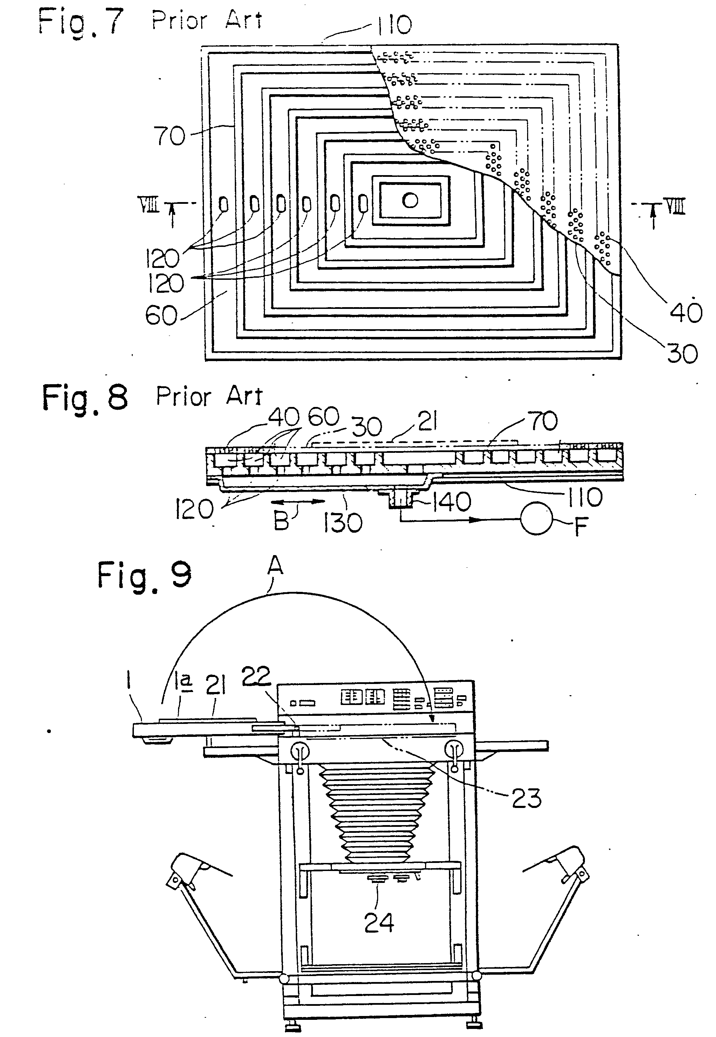

Referring to Figure 9 of the accompanying drawings, which shows a vertical-type process camera to which the present invention may be applied, the reference numeral 1 denotes a sheet holding unit, which includes an upper plate 1a which a sheet 21 is placed. The upper plate 1a is rotatable around a pivot axis 22 in the direction of arrow A, with the sheet 21 held thereon by suction. In this way the sheet 21 is positioned upside down at a focal plane 23, at which the sheet surface is exposed to light from an optical system 24.

A prior art apparatus shown in Figures 7 and 8 includes a base plate 110 and alternating rectangular valley portions 60 and hill portions 70 produced concentrically in the base plate 110. Each valley portion 60 is formed with an outlet port 120.

A face plate 30 is placed on the base plate 110 (strictly on the hill portions 70), the face plate having a number of suction pores 40 through which air is admitted to the base plate 110 (strictly to the valley portions 60). The reference numeral 130 denotes a communicating path means through which the air is drawn into a discharge 140 under suction by a suction means. The communicating path means 130 is reciprocally slidable in the direction of arrows B to adjust the area of the suction zone in accordance with the size of the sheet 21. In this way the sheet is secured on the face plate 30 regardless of its size.

However, because of the arrangement in which the outlet ports 120 in the base plate 110 are in direct contact with the respective valley portions 60, no substantial resistance acts on the flow of air. If the sheet is too small to cover all the suction pores 40, the leakage of air is inevitable through the suction pores not covered by the sheet. As a result the negative pressure in the valley portions 60 corresponding to the sheet-free suction pores tends to drop significantly. The negative pressure is defined as the pressure difference, given by the absolute value, between the atmospheric pressure and the lower pressure at the place of interest, here in the valley portion 60. The leakage of air through the suction pores 40 causes a reduction in the negative pressure in the communicating path means 130, thereby reducing the effective pressure for securing the sheet on the area of suction zone.

If the negative pressure in the base plate 110 is not sufficient to hold the sheet securely on the face plate, the sheet is likely to fall off the base plate. In order to avoid the sheet dropping off the face plate, other means are therefore required for covering the pores not covered by the sheet. In addition, the prior art base plate is heavy because it is a solid planar body. The base plate is usually made of cast aluminium, and a heavy base plate is inconvenient to handle.

A light weight base plate is known from DE-A-31 02 489.

The present invention aims to solve the problems pointed out above, and has for its object to provide an apparatus for sucuring a sheet on the face plate under suction, wherein suction pressure can be maintained for holding the sheet on the face plate regardless of a drop in the pressure because of the presence of suction pores in the face plate which are not covered by the sheet.

According to the present invention there is provided an apparatus for securing a sheet material under suction, the apparatus comprising : a face plate formed with suction pores adapted to allow air to pass through ; a base plate formed with outlet ports ; a corrugated plate located between the face plate and the base plate, the corrugated plate having alternately produced concentric hill portions and valley portions, the corrugated plate further including inlet grooves between one hill portion and the next and outlet grooves between one valley portion and the next, each outlet groove communicating with an outlet port in the base plate, the inlet grooves and the outlet grooves communicating with each other through a communication port formed in a partition between the inlet and outlet grooves and located at a point distant from the outlet ports ; and means connecting the outlet grooves with suction means.

Preferably, the hill portions and valley portions are of rectangular shape.

Conveniently, a communication port establishing communication between the inlet grooves and the outlet grooves is located near each corner of the hill portions.

In order that the invention may be readily understood, an embodiment thereof will now be described by way of example, with reference to the accompanying drawings, in which :

Figure 1 is a plan view showing an apparatus embodying the present invention ;

Figure 2 is a cross-sectional view taken along the line II-II in Figure 1 ;

Figure 3 is a cross-sectional view taken along the line III-III in Figure 1 ;

Figure 4 is a perspective view showing an internal structure of the apparatus of Figure 1 ;

Figure 5 is a rear view of the apparatus of Figure 1 ;

Figure 6 is a cross-sectional view taken along the line VI-VI in Figure 5 ;

Figure 7 is a plan view showing a prior art apparatus ;

Figure 8 is a cross-sectional view taken along the line VIII-VIII in Figure 7 ; and

Figure 9 is a front view showing a photographic copying machine equipped with the apparatus of Figure 7.

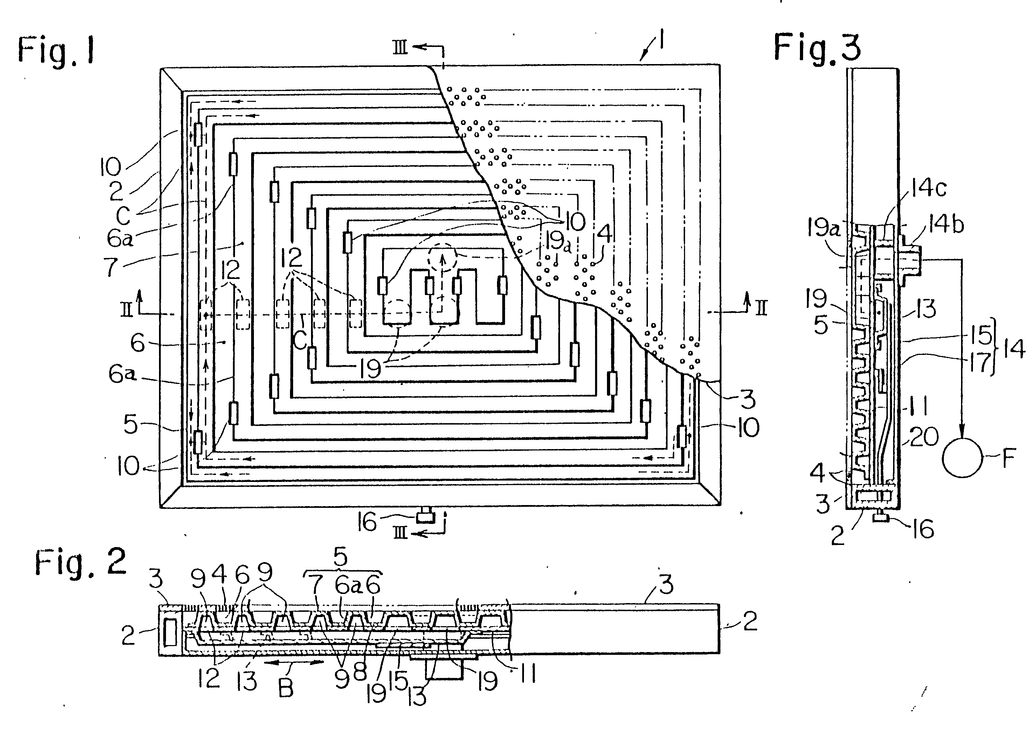

Referring to Figures 1 to 6, a sheet holding apparatus 1 embodying the invention includes four side frames 2, a face plate 3 on which a sheet is secured under suction, a corrugated plate 5 supporting the face plate from underneath, and a base plate 11.

The side frames 2, the face plate 3 and the base plate 11 constitute a thin box in which the corrugated plate 5 is fixed e.g. with an adhesive. The face plate 3 is provided with a number of suction pores 4 through which air is drawn. The corrugated plate 5 provides air paths communicating with the suction pores 4 in the face plate 3. The corrugated plate 5 includes alternately arranged hill portions 7 and valley portions 8, the reference numerals 6 and 9 denoting inlet grooves and outlet grooves produced between the portions 7 and 8. The hill portions 7 and the valley portion 8 contact the undersurface of the face plate 3 and the upper surface of the base plate 11, respectively. The inlet grooves 6 communicate with the suction pores 4 in the face plate, and the outlet grooves 9 communicate with outlet ports 12 produced in the base plate 11. Each outlet groove 9 has one outlet port 12, with the outlet ports being situated at corresponding positions throughout the outlet grooves. Separating each hill portion 7 and inlet groove 6 is a partition 6a having a communication port 10, which is sufficiently spaced apart from the outlet ports 12 to prevent loss of suction pressure. The communication ports 10 communicate with the grooves 6 and 9.

Air is sucked by a power suction means F (Figure 3) through the suction pores 4 in the face plate 3, the inlet grooves 6, the communication ports 10, the outlet grooves 9, and the outlet ports 12, and a shifter 13 which will be described below. The flow paths of the air are indicated by dotted lines C in Figure 1. The outlet grooves 9 act as a resistance to the flow of air, thereby relieving the rate of flow.

The shifter 13 is connected underneath the outlet ports 12 provided in the base plate 11 as best shown in Figure 3, wherein the reference numeral 14 denotes a suction zone switching device.

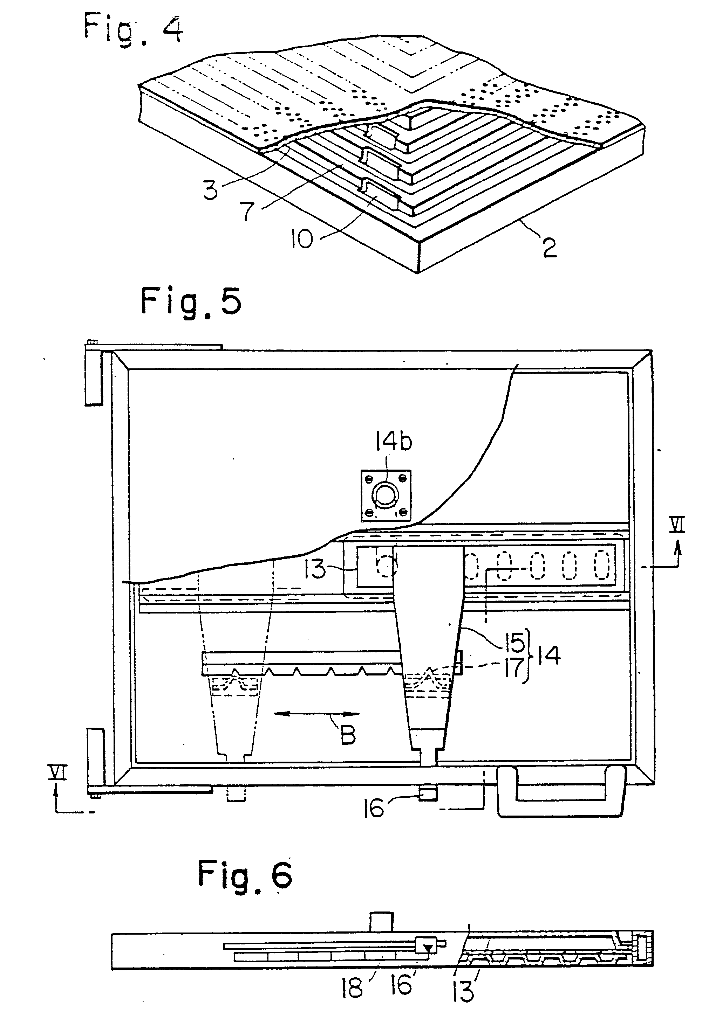

The switching device 14 serves to switch one suction zone to another by moving the shifter 13 in the direction of arrow B (Figure 2) in accordance with the size of the sheet. As shown in Figures 5 and 6 the shifter 13 includes a plate 15 having a knob 16, a stopper 17 for attachment to the plate 15, and a scale 18 by which a switching position is visually indicated. The switching device 14 is manipulated using the knob 16 so as to shift the shifter 13 to and fro as desired, thereby allowing air to escape optionally through circular discharge ports 19 alone or the discharge ports 19 and selected outlet ports 12 or the discharge ports 19 and all the outlet ports 12. In this way the active suction zone can be selected depending on the prevailing operating requirements. Accordingly, the outlet ports 12 communicate with the inlet grooves 6 through the outlet grooves 9, thereby ensuring that the suction zone is determined in accordance with the size of the sheet.

In Figure 3 the reference numerals 20, 14b and 14c denote a cover, a joint and an intermediate joint, respectively.

In the illustrated embodiment the shifter 13 is connected to the switching device 14, but since this embodiment has the outlet grooves 9 located between the inlet grooves 6 and the outlet ports 12, the switching device 14 is not necessarily required.

The present invention is applicable not only to a process camera but also to any other machines, such as a step-and-repeat machine or an automatic drafting machine, in which a sheet is secured under suction.

The present invention has many advantages, some of which are as follows:

(1) The sheet is securely held under suction imparted thereto regardless of the size of the sheet, by preventing loss of suction pressure even if the air leaks because of an unadequate placement of the sheet for the suction zone or the use of non-standard size of sheet.

(2) The corrugated plate is full of depressions in the form of the inlet and outlet grooves 6 and 9, thereby making it lightweight.

(3) If a suction zone switching device is provided, the leakage of air through the suction pores in the face plate can be minimized, thereby further improving he securing of the sheet on the face plate.

As is evident from the foregoing description, the outlet ports 12 in the base plate 11 communicate with the outlet grooves 9 in the corrugated plate, and the adjacently situated inlet and outlet grooves communicate through the port 10 which is spaced apart from the outlet ports 12. In this arrangement the outlet grooves are effectively resistant to the flow of air from the face plate 3. This ensures that the negative pressure inside the corrugated plate is kept constant, even if a drop in the pressure occurs in the inlet grooves which are not covered by the sheet. The leakage of air is unavoidable through gaps between the face plate and the sheet placed thereon, but the amount is negligible, so that the resistance to the flow of air occurring under suction is enough.

It is possible to increase the number of the communication ports 10 in the partition 6a, so as to ensure that the sucking force is evenly distributed against the face plate. The corrugated plate constitutes virtually a hollow body of the sheet holding apparatus with a number of grooves alternately produced, thereby leading to a lightweight structure.

The features disclosed in the foregoing description and in the accompanying drawings may, both separately and in any combination thereof, be material for realising the invention as claimed.

## Claims

1. An apparatus for securing a sheet material under suction, the apparatus comprising : a face plate (3) formed with suction pores (4) adapted to allow air to pass through ; a base plate (11) formed with outlet ports (12) ; a corrugated plate (5) located between the face plate and the base plate, the corrugated plate having alternately produced concentric hill portions (7) and valley portions (8), the corrugated plate further including inlet grooves (6) between one hill portion and the next and outlet grooves (9) between one valley portion and the next, each outlet groove communicating with an outlet port (12) in the base plate, the inlet grooves and the outlet grooves communicating with each other through a communication port (10) formed in a partition (6a) between the inlet and outlet grooves and located at a point distant from the outlet ports (12) ; and means connecting the outlet grooves with suction means (F).

2. An apparatus according to claim 1, wherein the hill portions (7) and valley portions (8) are of rectangular shape.

3. An apparatus according to claim 2, wherein the communication port (10) establishing communication between the inlet grooves and the outlet grooves is located near each corner of the hill portions.

4. An apparatus according to any one of claims 1 to 3, wherein a means (13) for connecting the outlet grooves and the suction means is shiftably provided so that the suction zone is selected in accordance with the extent of coverage of the suction pores in the face plate by the sheet.

## Patentansprüche

1. Vorrichtung zum Halten eines Blatts durch Saugkraft, wobei die Vorrichtung aufweist : eine Oberplatte (3), die mit zum Durchlaß von Luft eingerichteten Saugporen (4) ausgebildet ist, eine Grundplatte (11), die mit Auslässen (11) ausgebildet ist, eine gewellte Platte (5), die zwischen der Oberplatte und der Grundplatte angeordnet ist, und alternierend angeordnete Bergbereiche (7) und Talbereiche (8) aufweist und weiter mit Einlaßkerben (6) zwischen einem Bergabschnitt und dem nächsten Bergabschnitt und Auslaßkerben (9) zwischen einem Talabschnitt und dem nächsten Talabschnitt versehen ist, wobei die Auslaßkerben mit einem Auslaß (12) in der Grundplatte kommunizieren, die Einlaßkerben und die Auslaßkerben miteinander über eine Verbindung (10) kommunizieren, die in einem Abschnitt (6a) zwischen den Einlaßkerben und den Auslaßkerben ausgebildet ist an einem Ort mit Abstand von den Auslässen (12), und Mittel, die die Auslaßkerben mit Saugmitteln (F) verbinden.

2. Vorrichtung nach Anspruch 1, wobei die Bergabschnitte (7) und die Talabschnitte (8) rechteckförmig sind.

3. Vorrichtung nach Anspruch 2, wobei die Verbindung (10), die die Kommunikation zwischen den Einlaßkerben und den Auslaßkerben herstellt, nahe jeder der Kanten der Bergabschnitte angeordnet ist.

4. Vorrichtung nach einem der Ansprüche 1 bis 3, wobei ein Mittel (13) zum Verbinden der Auslaßkerben und der Saugmittel verschiebbar vorgesehen ist, so daß die Saugzone gewählt wird in Übereinstimmung mit dem Ausmaß der Abdeckung der Saugporen in der Oberplatte durch das Blatt.

## Revendications

1. Un appareil pour fixer un matériau en feuille sous aspiration, l'appareil comprenant une plaque frontale (3) formée avec des pores d'aspiration (4) agencés pour permettre le passage de l'air à travers, une plaque de base (11) formée avec des orifices de sortie (12), une plaque ondulée (5) disposée entre la plaque frontale et la plaque de base, la plaque ondulée étant pourvue de portions en relief (7) et de portions en creux (8) concentriques et alternées, la plaque ondulée étant en outre pourvue de gorges d'entrée (6) entre une portion en relief et la suivante et de gorges de sortie (9) entre une portion en creux et la suivante, chaque gorge de sortie communiquant avec un orifice de sortie (12) de la plaque de base, les gorges d'entrée et les gorges de sortie communiquant entre elles par un orifice de communication (10) formé dans une paroi (6a) entre les gorges d'entrée et de sortie et situé en un point éloigné des orifices de sortie (12), et des moyens reliant les gorges de sortie à des moyens d'aspiration (F).

2. Un appareil selon la revendication 1, dans lequel les portions en relief (7) et les portions en creux (8) sont de forme rectangulaire.

3. Un appareil selon la revendication 2, dans lequel l'orifice de communication (10), établissant la communication entre les gorges d'entrée et les gorges de sortie, est situé près de chaque coin des portions en relief.

4. Un appareil selon l'une des revendications 1 à 3, dans lequel un moyen (13) pour relier les gorges de sortie et les moyens d'aspiration est prévu déplaçable, de sorte que la zone d'aspiration est choisie en fonction de l'étendue du recouvrement des pores d'aspiration de la plaque frontale par la feuille.

Fig.1

Fig.3

Fig.2

0 201 108

## Fig. 4

3
7
10
2

## Fig. 5

14b

VI

13

15
17
14

B

16

VI

## Fig. 6

18  16  13

Fig. 7  Prior Art

Fig. 8  Prior Art

Fig. 9

3